# EUROPEAN PATENT SPECIFICATION

(11) **EP 1 369 842 B1**
(45) Date of publication and mention of the grant of the patent: **07.01.2009**
(21) Application number: 02010466.7
(22) Date of filing: 08.05.2002
(51) Int. Cl.: G09F 27/00

(54) **Wireless multimedia display device**
Drahtloses Multimediasichtanzeigegerät
Dispositif d'affichage multimédial sans fil

(43) Date of publication of application: 10.12.2003
(60) Divisional application: 04001244.5
(73) Proprietor: iPOC Technologies AG, 6300 Zug (CH)
(72) Inventor: Bühler, René, c/o Precisa Instruments AG, 8953 Dietikon (CH); Huber, Rudolf, c/o Precisa Instruments AG, 8953 Dietikon (CH)
(74) Representative: Rupp, Christian

(56) References cited:
- WO-A-01/37595
- WO-A-02/25624
- DE-A- 10 034 078
- US-A- 5 510 828
- US-A- 5 740 369
- US-A- 5 796 351
- US-A- 5 831 664
- US-A- 6 130 726
- PATENT ABSTRACTS OF JAPAN vol. 1999, no. 12, 29 October 1999 (1999-10-29) & JP 11 175650 A (SENSOR TECHNOS KK), 2 July 1999 (1999-07-02)

## Description

### FIELD AND BACKGROUND OF THE INVENTION

The underlying invention generally relates to the field of mobile computing, wireless communication, and interactive multimedia applications in mobile communication networks with high-speed access. Particularly, it refers to a customized multimedia information channel system presenting advertisement information and, if desired, other multimedia streams on a mobile communication and computing device equipped with a Liquid Crystal Display which meets modern business-to-business (B2B) requirements. In this connection, interactive operation is guaranteed by a bidirectional digital wireless data and control link realized as an RF interface between said device and a product to be advertised.

In the recent past, the Internet has emerged as a dynamic medium for channeling online transactions between customers and firms on a virtual marketplace (e-business). Due to the rapid growth of the World Wide Web (WWW), there has been a corresponding expansion in commerce on this robust platform. Likewise, wireless communications has become an inherent part of most people's working lives and lifestyles today and is one of the fastest growing applications within smart card industry. The next generation of Universal Subscriber Identification Modules (USIMs) will feature a variety of additional customer services such as online banking and trading, ticket reservations, ordering food deliveries, Internet access, weather reports and all different kind of additional location-based and personalized services.

Presently, new technologies are being developed which allow mobile telephones and other portable devices to comfortably access the Internet, and hence to be used for e-business applications. As they are portable, and due to the vast number of potential users, emerging wireless m-business applications will be at least as important as conventional Internet connections for e-business. This trend is mainly be driven by the massive deployment of wireless key technologies (e.g. Bluetooth, WAP, GPRS, and UTMS), mobile devices (e.g. PDAs and smartphones) and services (e.g. m-business, e-purses and e-vouchers), which will bring significant new challenges to enterprise information and resource management. As standards such as Wireless Access Protocol (WAP) evolve in line with Internet standards, Web access and content will become a market driver for mobile data.

Over the next few years, mobile technologies and the Internet will feed on each other in order to fuel e-business developments. With mobile telephone usage predicted to continue to outstrip PC usage in most markets worldwide, it is possible that many of the e-commerce systems that will evolve over the next decade will be based largely around wireless communications involving portable devices such as cellular telephones, Personal Digital Assistants (PDAs) and hybrids of these. Such portable devices will provide a low-cost form of Internet access for some and a bridge for continuous access for others. Furthermore, wireless communications has the potential to link diverse appliances in the home, office and factory, which, when combined with technologies such as Global Positioning System (GPS), creates many potentially interesting new applications. The penetration of wireless devices and a maturing Internet economy provide potentially powerful opportunities to satisfy business needs for increasing customer intimacy, greater responsiveness and shorter cycle times. Today, there are significant challenges in preparing for and managing the business and technology components of m-business.

Online commerce can be transacted in many forms, depending on the respective type of business activity. An emerging business model in online commerce for which the underlying invention can advantageously be applied is business-to-business (B2B) commerce: This includes inter-company trading and supplier networks, vertical industry exchanges, horizontal linkages between firms, and digital business-market mechanisms that include auctions, spot markets and others. The economic justification for these types of businesses lie in cost and scale efficiencies, product and service aggregation, and lower search costs combined with broader reach and convenience. Revenues are derived either on transaction-based fees, or long standing contractual relationships.

Although wireless access is creating considerable opportunities for m-business, it also involves significant complexities. Wireless carriers, Internet portals and application service providers have to create new strategic partnerships to avoid failure in a dynamic but immature new market. Furthermore, companies have to survey their corporate requirements and make prudent investments that are aligned with key business initiatives. The use of mobile devices for wireless access to corporate resources will result in substantial new management, security and support issues.

Rapid advances in handheld computing devices, wireless network connectivity and data transfer speeds are driving the revolution in wireless computing. Over the next few years, wireless data communications will emerge as a viable, cost-effective extension of and alternative to wired technologies. Thereby, companies will expect their mobile workforce to have the ability to work effectively anywhere and anytime. The impetus behind these developments is straight forward: enterprises that empower their mobile workforce have a platform for improving their competitive advantage.

The success of wireless data applications mainly depends on three factors: networks, devices, and applications. From the carrier side, there is the need for nationwide networks that have high availability, are cost-effective and reliable. Furthermore, mobile devices will need to have long battery life, be lightweight, durable, easy to use and have easy-to-read screens. Recent developments in microelectronics such as flash memory, micro-displays and various input options have made PDAs smaller, faster, more reliable and cost-effective than ever before. For example, modern PDAs are provided with a built-in wireless radio transmitter for network connectivity, and new services are coming online that extend wireless data capabilities to the family of Palm handhelds.

Single-function mobile handheld devices, such as bar code scanners, pagers, and electronic organizers have been deployed across a variety of vertical applications. The next stage of development for mobile computing will involve the deployment of wireless, expandable devices capable of conducting enterprise data management and mobile communications with greater efficiency and at a lower total cost than their predecessors. Today, device suppliers stand at the cusp of the transition from a business-to-consumer (B2C)- to a business-to-business (B2B)-oriented marketplace. To that end, leading vendors are developing the next generation of portable devices that will dictate how enterprise users access and manage data and voice communications from a mobile access point.

### BRIEF DESCRIPTION OF THE PRESENT STATE OF THE ART

Personal Digital Assistants (PDAs) are becoming increasingly ubiquitous, and technology such as Bluetooth and the IEEE 802.11 standard will bring PDAs into close interactive communication with other types of devices. Furthermore, cellular phones and pagers, which are primarily used for communication, are increasingly becoming programmable. Today, it is investigated how these kinds of SHDs can be used with all kinds of home, office, and factory equipment. The concept is that people can use their own SHDs, e.g. to control a photocopier in an office, a machine tool in a factory, the lights or a video cassette recorder at home, and almost any other kind of electronic device.

In addition to the capability to attach a PDA to a desktop or portable PC in order to allow a synchronization of calendars, emails, contact lists, and other personal data, PDAs are increasingly extended by attachment of a cell phone, printer, additional memory module, modem, or other peripheral devices.

A basic distinction of personal information devices can be made between Smart Handheld Devices (SHDs), which are used to access content, and desktop or notebook computers, which comprise keyboards and can thus be used to create content as well as access it. SHDs can be subdivided into telephones, which put voice first, and Personal Digital Assistants (PDAs), such as devices from Palm, Psion and others, which put data first. Telephones, of course, can handle some data, and PDAs are being given voice capabilities. But it is a matter of priorities. Handheld wireless devices fall into four broad categories: enhanced telephones, smartphones, PDA tablets and PDA clamshells. Smartphones and PDAs will subdivide into pen-based and keyboard-based variants. The small size ("form factor") of many mobile devices limits the amount and type of data that can be input or output, which will be key in determining the most suitable types of mobile application. The more data-centric an application, the more it will need larger screen sizes.

When mobile telephone capabilities are added to PDAs, more data-intensive applications will become possible. Speech recognition and enhanced displays using new technologies such as light-emitting polymers will also help to overcome the constraints of mobile devices' small size, further enhancing their usability for m-business. For example, Nokia has its "Dial A Coke" concept for vending machines, where product choice is made by telephone and the price is billed by the cellular operator. A car wash in Helsinki also works in a similar way. Peoples Phone of Hong Kong is launching a service to allow bill payment by credit card via mobile telephones. Mobistar of Belgium has demonstrated loading e-cash onto Proton smart cards over mobile telephones. Telenor of Norway is running a public trial allowing users to select and pay for cinema and theater tickets by mobile telephone. Investors in Singapore can buy and sell shares using the data capabilities of their mobile telephones.

Many PDAs also have either a Universal Serial Bus (USB) or a serial port. An USB or serial cable can be attached to the port, or the entire device can be inserted into a cradle that provides an USB or serial connection to a desktop or portable PC, or to USB or serial devices. They may also support one of the following expansion interfaces, thereby facilitating the connection peripherals, addition of memory or provision of network connectivity. Each interface accommodates a specific type of card that is inserted into the interface:
- The Springboard interface is a proprietary interface designed by Handspring for their Visor family (Palm platform) of devices. It has the largest physical volume of the peripheral cards. Furthermore, the Springboard interface provides the highest data transfer rate because it allows attached I/O devices to be connected directly to the processor bus. Besides, it can accommodate a separate battery to support higher power functions.
- CompactFlash is an industry-standard expansion interface for portable devices. It is widely supported, and although the CompactFlash card size is relatively small, it provides enough room to implement many functions. It is a popular interface for adding memory to digital cameras and portable MP3 players. In addition, serial ports, modems, Ethernet cards, cellular network attachments, and Global Positioning System (GPS) devices are implemented on CompactFlash cards. Due to this wide support, the interface is expected to be supported by many devices in the future.
- The SmartMedia interface is the proprietary design currently manufactured by Toshiba and Samsung. Toshiba has trademarked the name, but has made the specification available for free to the industry in the hope of creating a standard. Not all SmartMedia cards are interchangeable. Some interfaces require 5.0 V from the connecting PDA, some use 3.3 V, and others can be adapted to either voltage. Thereby, the voltage of the card must be matched to the voltage of the specific portable device.
- MultiMediaCard was created by a joint agreement between Siemans, Hitachi and Sandisk. The MultiMediaCard has the size of a postage stamp and is designed to provide a small memory storage medium for portable MP3 music players. Its small size limits its ability to support a variety of other I/O attachments.
- Secure Digital is based on the MultiMediaCard interface. Furthermore, this interface also supports the SDMI specification. Similar in size to the MultiMediaCard, the Secure Digital card is used mainly for simple memory expansion. Although the specification enables the development of I/O devices using cables or other extensions, this approach can be cumbersome due to its small size. An advantage of the Secure Digital interface is that it can also accept a MultiMediaCard.

Most PDAs are provided with infrared ports, which implement the Infrared Data Association (IrDA) standard. These ports can be used to connect the PDA to a desktop or portable PC, exchange contact information with other mobiles, or connect the PDA to cell phones, printers, and other infrared devices. As the Bluetooth personal area network (PAN) technology becomes more prevalent, IrDA ports are expected to be superseded on handheld devices. Nowadays, Bluetooth networking technology is deemed as the key component in the context of techniques providing short-range wireless connectivity. The main purpose of Bluetooth is to replace cables between electronic devices, such as telephones, PDAs, laptop computers, digital cameras, printers, and fax machines by using a low-cost radio chip.

In future, SHDs that accept PC cards will be able to utilize Bluetooth PC cards. Pairing these PC card-enhanced PDAs with wireless technology based on Bluetooth yields the potential to provide a wider range of connectivity options than products by Handspring or Palm. Motorola recently released a cell phone called Timeport 270 that has a Bluetooth add-on. With a Bluetooth PC card inserted into a PDA, it can wirelessly access the Internet from the Bluetooth card on the Motorola cell phone up to 30 feet away. The Motorola cell phone receives the packets by using the Wireless Application Protocol (WAP) and transmits these packets to nearby PDAs or computers. Thereby, the user can access any WAP Web site on the Internet. The only drawback is that users must carry two separate devices - a cell phone and a PDA.

Currently, most PDAs and more and more cellular phones are equipped with an internal expansion port for media cards such as InfoSticks or multimedia cards like CompactFlash cards. Thereby, external expansion interfaces like a printer or an Access Point (AP) of a mobile network can be used in combination with a short-range radio technology like Bluetooth by applying an integrated radio module placed in an expansion port of the PDA, which can e.g. be used as a CompactFlash card.

Fully compliant with the ISO standard 14443A, MIFARE® is a well-known industry standard for contactless and dual interface smart card schemes. With an immense worldwide installed base, it is a well proven RF communication technology for transmitting data between a card and a reader device. The platform offers a full range of compatible integrated circuits (ICs) for contactless smart cards and card readers, as well as dual interface ICs that provide a secure link between the contactless and contact card markets.

Delivering a competitive and highly reliable platform for all types of service, from very low cost solutions to multifunctional cards including contactless technology, Java cards - smart cards that are able to execute Java byte code, similar to the way Java-enabled browsers do - are presently at the forefront of the smart card market. Thereby, Java helps to make smart cards more accessible to developers and business people by providing a well-understood, familiar environment. However, since standard Java with all of its libraries (especially in the Java 2 guise) is far too big to fit on a smart card, a stripped-down version of Java has specially been created. Java cards are based on a subset of the Java Application Programming Interface (API) plus some special-purpose card commands.

Together with standards like Java Card 2.1 and Open Platform 2.0, highly optimized Java implementations, 8-bit WE family and MIFARE® PROX dual interface smart card controller ICs by Philips Semiconductors are paving the way for the development of Open Platform smart cards. Capable of being dynamically updated, even after issuance, said cards offer high security between application, advanced cryptography based on the Data Encryption Standard (DES), increased flexibility for service providers, including use in existing MIFARE®-based transport schemes, easy implementation, and finally quick time-to-market for new services. These Open Platform and multi-application cards are offering unprecedented choice for financial institutions. A wide variety of off-the-shelf solutions are available from several leading industry providers, resulting in a great choice of multi-sourced Java products.

Philips Semiconductors' 8-bit WE family of security and crypto-controller smart card ICs offers new features such as highly integrated 0.35 µm process technology featuring five metal layers. It delivers the flexibility and security to support a wide range of applications on a single card. They are suitable for security-sensitive application such as banking, SIM cards for mobile phones, pay TV and Security Access Modules (SAM) for Point-of-Sale (POS) terminals.

For the communication between said smart cards and their environment, any standard telecommunication networks, e.g. Local Area Networks (LANs), Metropolitan Area Networks (MANs) and/or Wide Area Networks (WANs) which can be accessed via modem or ISDN, can be used.

The status of the applied rendering devices can be controlled by means of a single interface. Thereby, alarm signals can be received via e-mail, mobile phone or pager.

Broadcast transmissions of multimedia content via satellite and/or multicast networks allows to transfer several hundred or thousand display positions. Thus, a plurality of rendering devices can be addressed by a single transmission, which significantly reduces cost and time needed for said broadcast transmission.

The data transmission to the rendering devices can be performed by means of an Internet standard protocol, e.g. via File Transfer Protocol (FTP) using the Transmission Control Protocol (TCP) and/or the Internet Protocol (IP). By applying FTP servers, two or more rendering devices can simultaneously be addressed.

US 5,796,351 teaches a system for providing information about exhibition objects. The system has a database system for storing information about exhibition objects, host computer and at least one terminal. The host computer has a host transmitter/receiver unit and retrieves information from the data base system according to the identification code of a given exhibition object. Each of the exhibition objects has a communication unit that returns an identification code in response to a request signal.

US 5,740,369 teaches a transmitting management apparatus transmitting information having an identification number corresponding to a portable information terminal to which information is to be delivered and/or having a sorting code identifying the information. The portable information terminal receiving transmitted information selectively acquires stores proper information by referring to the identification number and/or the sorting code of the received information and displaced the proper information on a display means.

### OBJECT OF THE UNDERLYING INVENTION

In view of the explanations mentioned above, it is the primary object of the underlying invention to enable users to create television-style multimedia presentations and to distribute them to television and/or computer screens in remote locations.

This object is achieved by means of the features of the independent claims. Advantageous features are defined in the dependent claims. Further objects and advantages of the invention are apparent in the following detailed description.

### SUMMARY OF THE INVENTION

The proposed solution according to the underlying invention is basically dedicated to a customized multimedia information channel system presenting advertisement information and, if desired, other multimedia streams on a mobile communication and computing device equipped with a Liquid Crystal Display (LCD) designed to meet modern business-to-business (B2B) requirements. In this connection, interactive operation is guaranteed by a bidirectional digital wireless data and control link realized as an IrDA interface between said device and an item to be advertised.

### BRIEF DESCRIPTION OF THE CLAIMS

In the following sections, the main aspects and embodiments of the underlying invention as disclosed in the appended claims shall briefly be summarized. A more detailed description of the invention and said claims will follow in a subsequent section dedicated to the description of the enclosed figures.

The underlying invention is directed to a multimedia display device, comprising a screen for displaying content information, a control means for controlling the screen, means for enabling a user to input information, and a bidirectional air interface for wirelessly transmitting data to external devices and for wirelessly receiving data from external devices and for transmitting data from/to the control means whereby the control means is adapted to receive content information from an external file server over the air interface and to transmit user input information over the air interface to the external file server.
Hereby, the control means is further adapted to receive remote control information from an external remote control device over the air interface, the remote control information setting parameters for the display of the content information on the screen, to locally store content information received from the external file server over the air interface in a permanent storage device in the multimedia display device for later display on the screen, to transmit information representing the current status of the multimedia display device over the air interface to the external remote control device and to automatically display the content information on the screen in case that an external tag device is wirelessly detected.

Preferably, the device further comprises a speaker means for rendering audible content information and remote control information, respectively, wherein the control means controls the speaker means and further comprises a detecting means for wirelessly detecting the presence of a tag device in the neighborhood of the multimedia display device, wherein the control means dynamically controls the display of the content information depending on the detection of a tag device.

Preferably, the detecting means is an RF receiver with a tag antenna and the detected tag device is a transponder comprising a wireless smart card.

Advantageously, the content information displayed depends on identification data of a detected tag device.

Advantageously, the control means) is further adapted to control the information input means, the permanent storage device, the detecting means and a mobile transceiver, said mobile transceiver being capable of transmitting and/or receiving modulated RF signals to/from the external file server, and the multimedia display device further comprises a coprocessor for controlling the bidirectional air interface and the multimedia display device depending on setting parameters designated by remote control information received.

Preferably, the bidirectional air interface is an IR interface.

Further, preferably, the multimedia display device comprises a local storage device for advertisement information, a database associating identification data of wireless smart cards with predefined advertisement information, and an RF receiver for detecting the presence of a wireless smart card in the neighborhood of the display terminal, the controller dynamically displaying the locally stored advertisement information associated with the identification data of the wireless smart card detected.

### BRIEF DESCRIPTION OF THE DRAWINGS

Further advantages and possible applications of the underlying invention result from the subordinate claims as well as from the following description of the preferred embodiment of the invention which is depicted in the following drawings:

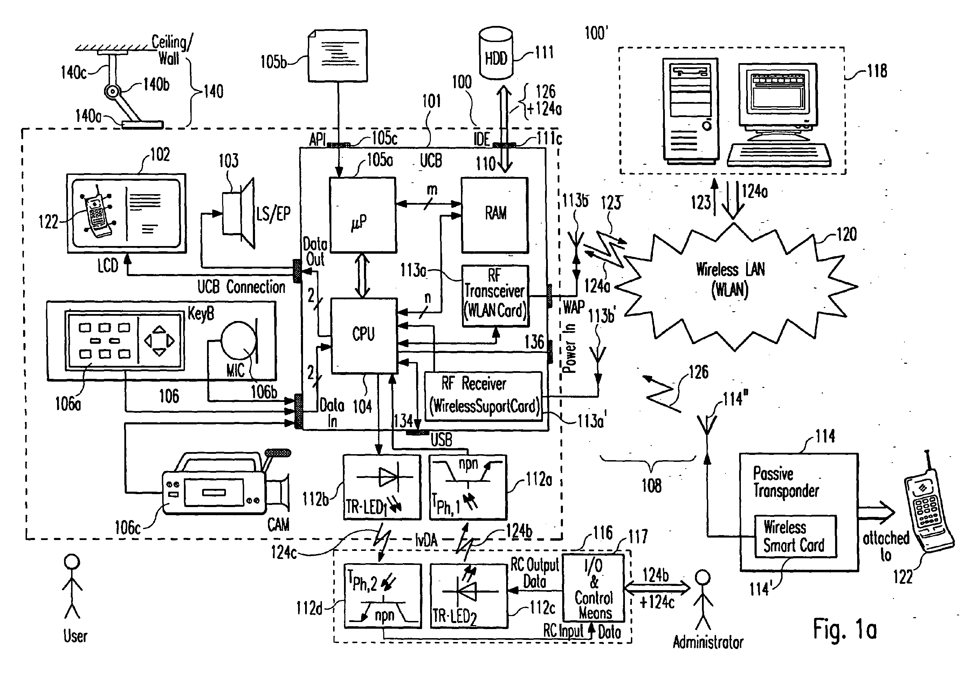

- Fig. 1a: exhibits a block diagram showing a system architecture for a multimedia display device according to the underlying invention and its interaction in a wireless environment capable of processing and displaying multimedia streams received over the air interface, which is used for presenting advertisement information about a specific item by wirelessly detecting the presence of a tag device attached to said item, thereby dynamically controlling the display of the content information depending on the detection of a tag device,

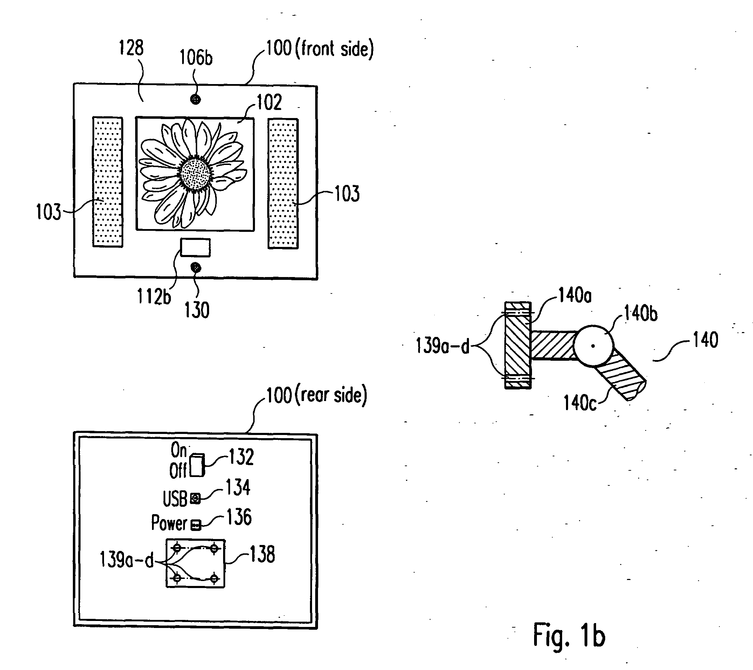

- Fig. 1b: shows the front and rear side of the multimedia display device and a fastening element used to attach said multimedia display device to a wall, and

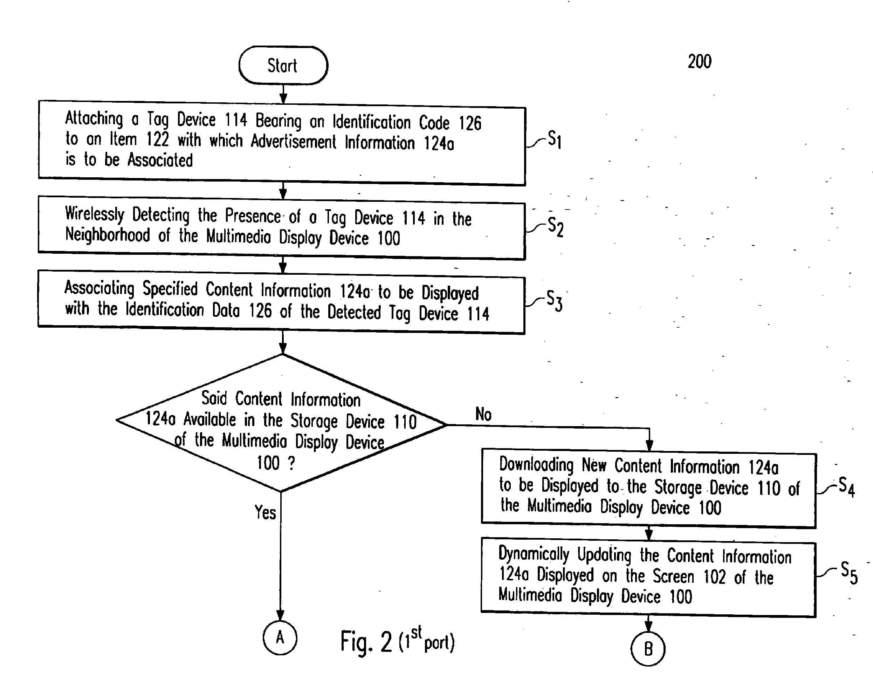

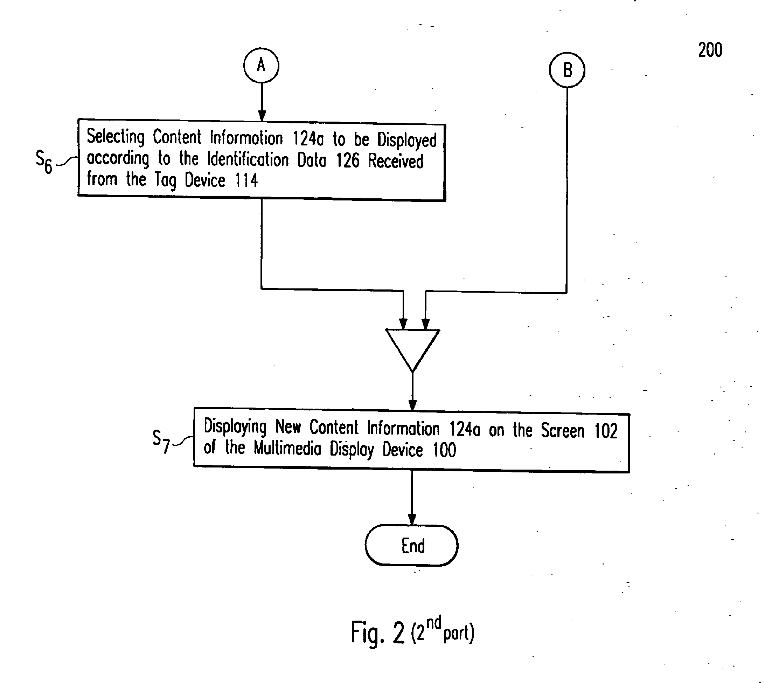

- Fig. 2: presents a flowchart illustrating a method for displaying advertisement information about a specific item on a multimedia display device according to the underlying invention by wirelessly detecting the presence of a tag device attached to said item, thereby dynamically controlling the display of the content information depending on the detection of a tag device.

### DETAILED DESCRIPTION OF THE UNDERLYING INVENTION

In the following, the preferred embodiment of the underlying invention as depicted in Figs. 1a, 1b, and 2 shall be explained in detail. The meaning of the symbols designated with reference signs as depicted in said figures can be taken from the appended table of reference signs.

In Fig. 1a, a block diagram is depicted showing a system architecture for a multimedia display device 100 according to the underlying invention and its interaction in a wireless environment capable of processing and displaying multimedia streams received over the air interface 108, which is used for presenting advertisement information 124a about a specific item 122 by wirelessly detecting the presence of a tag device 114 attached to said item 122, thereby dynamically controlling the display of said content information 124a depending on the identification data 126 of a detected tag device 114.

In a first embodiment of the underlying invention, the multimedia display terminal 100 is fixed and the item 122 with the attached tag device 114 is carried to said multimedia display terminal 100. In a second embodiment, however, the multimedia display terminal 100 is a mobile terminal to be carried to the fixed item 122 with the attached tag device 114.

In contrast to conventional solution, said multimedia display device 100 comprises a User Control Board 101 (UCB) with an Application Programming Interface 105c (API) providing an intercommunication between a software routine 105b, said User Control Board 101 (UCB), the Liquid Crystal Display 102 (LCD) of said device 100, and an additional hard-disk drive 111 (HDD) for storing content data 124a to be rendered on the display 102 of said device 100. Thereby, said UCB 101 is capable of transmitting user requests 123 to a specific file server 118 over an air interface 108 and a Wireless Local Area Network 120 (WLAN), and receiving content information 124a (e.g. advertising information about a specific item 122) from said file server 118. Furthermore, it is capable of receiving control information 124b (e.g. control parameters for adjusting the audio volume and the screen brightness of the multimedia display device 100, respectively) from a remote control device 116, transmitting status information 124c representing specific setting parameters of the multimedia display device 100 (e.g. a signal indicating "stand-by" or "on" mode of said multimedia display device 100) to said remote control device 116, and receiving identification codes 126 specifying said item 122 from said tag device 114.

The central processing unit 104 (CPU) of the multimedia display device 100, which is mounted on the UCB 101, serves to control the hardware elements of said display device 100 - the touch-sensitive flat-panel screen 102, loudspeakers or earphones 103 for rendering acoustic content information 124a, the information input means 106 (e.g. a keyboard 106a, a microphone 106b and/or a Web camera 106c), a permanent (non-volatile) storage device 110 for the later display of user data 124a (content information) received over the air interface 108, and a mobile transceiver (WLAN card) capable of transmitting and/or receiving modulated RF signals representing user requests 123 to be transferred from the multimedia display device 100 to the file server 118, and content information 124a (user data) to be transferred from the file server 118 to the multimedia display device 100.

The coprocessor 105a (µP) of the UCB 101 is a small microprocessor which is needed for controlling the bidirectional air interface 108 and the multimedia display device 100 according to setting parameters designated by received remote control information 124b. The control software 105b running on said coprocessor 105a, which is fed to the UCB 101 over a specific Application Programming Interface 105c (API), is responsible for sending and receiving data encoded by infrared light impulses, and controlling the setting parameters of said multimedia display device 100 (e.g. volume, brightness, etc.).

Moreover, the system provides a way of connecting auxiliary devices (e.g. barcode scanner, printer, etc.) with the aid of two or more Universal Serial Bus (USB) ports 134. Any data received from these auxiliary devices is sent to a control software 105b. Any data to be sent to these auxiliary devices is provided by said control software 105b.

According to the underlying invention, the retransmission of status information 124c from the UCB 101 to the file server 118 can e.g. be accomplished by a multimedia display device 100 with a touch-sensitive screen 102 which allows a user to comfortably input and dispatch content data 124a and control commands 124b. Aside from a keyboard 106a serving as an input means for text data, the multimedia display device 100 can be equipped with further input means 106, e.g. a microphone 106b or a Web camera 106c serving as input means for audio and video data, respectively.

Content data 124a that can be rendered by the multimedia display device 100 can dynamically be modified. Thereby, said content data 124a depends on detecting the presence of any passive transponder supplied with a wireless smart card 114' in a close environment of the multimedia display device 100, which serves as a tag device 114. For this purpose, said multimedia display device 100 is equipped with an additional tag antenna 113b' connected to an RF receiver 113a' capable of detecting which tag device 114 is in a close environment of said multimedia display device 100 or whether there is any tag device 114 at all. For example, such tag devices 114 can be attached to products 122 sold in a supermarket or in a department store. Thus, content information 124a displayed on the touch-sensitive screen 102 of the multimedia display device 100 refers to the respective product 122 in a close environment of the multimedia display device 100.

The user can give input to the multimedia display device 100 in three ways: by touching the screen 102 in case a touch sensitive display is applied, by means of speech input over an integrated microphone 106b, by means of a contactless smart card 114' which can be detected when hold close enough to the multimedia display device 100, or by sending input information over an Infrared Data Association (IrDA) interface. Likewise, different forms of user output are conceivable: by means of a Thin Film Transistor (TFT) screen 102 serving as an output means for video data, by means of two 2 W loudspeakers serving as output means for audio data, by means of a light-emitting diode 130 (LED) which is on when the system is connected to power and switched on, or again via IrDA.

Thereby, the system administrator is able to control audio volume, screen brightness and the system status ("stand-by mode" or "on") with the aid of a Personal Digital Assistant (PDA) over the air interface 108 via IrDA by using a dedicated program.

Fig. 1b presents the front and rear side of the multimedia display device 100 and a fastening element 140 used to attach said multimedia display device 100 to a wall. In one embodiment of the underlying invention, the encasing 128 of the proposed multimedia display device 100 accommodates
- a touch-sensitive flat-panel screen 102 realized as a Liquid Crystal Display (LCD),
- a microphone 106b (MIC) serving as an input means for audio data,
- two loudspeakers 103,
- one infrared-light-emitting diode 112b (IR-LED₁) used for wirelessly transmitting status information 124c about the multimedia display device 100 to a remote control device in the neighborhood of said device 100 for controlling the settings of the multimedia display device 100, and finally
- one light-emitting diode 130 (LED) indicating "stand-by" or "on" mode of said multimedia display device 100,
which are placed at the customer-specific front side of the multimedia display device 100. Thereby, said multimedia display device 100 receives 12 V DC voltage either through a standard power connector 136 at the rear side or from a battery pack. An on-off switch 132, a Universal Serial Bus (USB) interface 134, a plug-in power supply jack 136, and a socket area 138 used for attaching said multimedia display device 100 to a wall with the aid of a fastening element 140 are placed at the rear side of said multimedia display device 100. Thereby, said socket area 138 is provided with four bore holes 139a-d used for attaching the attachment area 140a (flange) of said fastening element 140 to the socket area 138 at the rear side of the multimedia display device 100 by means of a bolted joint.

The fastening element 140 is applied to attach said multimedia display device 100 to a wall or to the ceiling of a room. It comprises an attachment area 140a (flange), which is connected to the socket area 138 at the rear side of said multimedia display device 100, a customer-specific pivoting hinge 140b used for adjusting the position of said multimedia display device 100 when mounted to a wall or the ceiling of a room, and a hinge pin 140c serving as an attachment means for mounting said multimedia display device 100 to a wall or to the ceiling of a room. A user is able to fix the hinge 140b at any angle. The form of said hinge 140b depends on the structure where it is to be attached.

Liquid Crystal Displays (LCDs) realized in Thin Film Transistor (TFT) technology which are applied to SHDs usually have a relatively small viewing angle in order to save power. For SHDs, this is usually not a severe impairment. However, for use as an information display terminal 100 in supermarkets, shops and department stores where said display terminal 100 is placed in a fixed position (e.g. attached to a shelf), defining a large viewing angle might be a problem. Therefore, another TFT screen 102 is needed, which possibly leads to a redesign of the mechanical components 140a-c around said TFT screen 102.

In Fig. 2, a flowchart 200 illustrating a method for displaying advertisement information 124a about a specific item 122 on a multimedia display device 100 according to the underlying invention by wirelessly detecting the presence of a tag device 114 attached to said item 122, thereby dynamically controlling the display of the content information 124a depending on the detection of a tag device 114. Said method is executed by means of a computer software program product running on said multimedia display device 100.

In a first step (S₁), a tag device 114 (realized as wireless smart card) bearing an identification code 126 is attached to an item 122 with which advertisement information 124a is to be associated. After having detected the presence of a tag device 114 in the neighborhood of the multimedia display device 100 in a second step (S₂), specified content information 124a to be displayed is associated with the identification data 126 of the detected tag device 114 in a third step (S₃).

In case content information 124a associated with a detected tag device 114 is not available in the Read Access Memory 110 (RAM) of the multimedia display device 100, new content information 124a to be displayed is downloaded to said storage device 110 over an air interface 108 in a fourth step (S₄). Then, in a fifth step (S₅), content information 124a stored in said Read Access Memory 110 (RAM) is dynamically updated. Otherwise, available content information 124a associated with a detected tag device 114 which shall be displayed on the flat-panel screen 102 of the multimedia display device 100 is selected in a sixth step (S₆).

Finally, the updated content information 124a is displayed on said screen 102 in the last step (S₇).

The main advantage of the proposed solution according to the underlying invention is that it allows vendors to create customized interactive multimedia presentations in television style and to distribute them to a fixed information display terminal and/or to the screen of a customer's mobile computing device 100. Thereby, it enables vendors with minimal technical training to advertise products and to better communicate with software tools that combine networking and video technologies, which means to produce and distribute multimedia communication programs in order to target an audience at specific locations and/or times. In this connection, the inventive solution addresses the complete range of creation, scheduling, distributing and playback of multimedia data. Since the proposed approach works with existing and future network infrastructures, the value of existing hardware and software investments can be preserved, thereby maximizing the use of existing digital media. The invention provides support for specific hardware peripherals and is positioned to coincide with advertisements in networked multimedia and streaming video. Offering the first bidirectional communication from the multimedia display device 100 back to the central broadcaster (e.g. a file server 118 of a specific content provider or a satellite broadcaster), the invention represents a possible convergence of traditional computer network technology and television. Major markets where said invention can advantageously be deployed include cable television, corporate communications, retail point of sale, public and institutional information, interactive presentation as well as interactive television.

| Glossary | |
|---|---|
| Term | Brief Explanation |
| A2B | Administration to business: Electronic interaction between public authorities and companies such as transferring tax forms or application forms. |
| A2C | Administration to consumer: Electronic interaction between public authorities and customers such as transferring tax forms or driving-license documentation. Authorization to access a computer offering online services or owned by an Internet service provider. |
| B2B | Business to business: Business transactions between companies that take place in the form of electronic interactions, and generally as a result of formal, contractual agreements. B2B functions include sophisticated Internet authorization procedures and price-proposal monitoring, contract and content information for each partner, catalogs with customer information based on access controls, parameter searches for reliable business customers, together with functions for order input such as standardized "send-to" locations, dynamic cost accounting for orders, and different payment options. B2B is the biggest transaction sector in the Internet. |
| B2C | Business to consumer: Business transactions between companies and end customers that take place in the form of electronic interactions. B2C can imply formal relationships (e.g. customers with managed assets, subscription services, or content) and ad-hoc relationships (which occur in real time, to offer new customers purchasing or selling opportunities, or access to information). |
| C2C | Consumer to consumer: Electronic interaction between customers (generally for business purposes), e.g. the sale of second-hand goods. |
| E-Business | Generic term for business that is processed via electronic media, including the Internet, other computer networks, or wireless transmission equipment. |
| E-Commerce | E-commerce or electronic trade is a part of e-business and a generic term for all types of transaction conducted over electronic media. The Internet is the primary medium for e-commerce, but standards such as Electronic Data Interchange (EDI) can also be used for e-commerce via corporate networks. E-commerce consists mainly of purchase/sale transactions. Other types of transaction include business conducted by public authorities and banks. |
| ECRM | Electronic Customer Relationship Management: This relationship management is based on a combination of technologies including the Internet, mobile business, and voice communication. Customer advantages include the ability to contact a service provider using any available communications medium. |
| Electronic Cash | Digital money/e-cash: Generic term for electronic payment transactions, e.g. on the Internet and in the context of online services. Vast resources are currently being devoted to ensuring that e-cash is secure, so that business on the Internet can run more smoothly. E-cash generally refers to electronic money used on the Internet. In order to turn the Internet into a giant cybermall (online shopping center), companies have developed software that provides complete and secure order processing over the Internet. These software packages support a variety of payment schemes which mostly fall into two categories. |
| Handheld PC | These pocket-sized computers are also known as Personal Digital Assistants (PDAs). Unlike common organizers, they also include PC functions such as office programs. The latest versions of these devices also offer e-mail and the ability to download special pages from the Internet. Hand-sized computers used with special pens are known as Palm PCs or palmtops. |
| HTML | Hypertext Markup Language: This language is used to format the files on a Web site. HTML is a document description language based on hypertext, and defines the structure of a document, e.g. font sizes, la y out, integration of graphics, etc. Any text editor can be used to create HTML documents, since they are stored as pure ASCII text. However, it is easier to create such documents using special Web editors. |
| Mobile Business | M-business integrates the Next Generation Internet, mobility and electronic business. It provides resources, service, infrastructure and solutions for secure communication: - anywhere (in the office, at home, on the move), - over any network (wire-bound, wireless), - to any communication device (telephone, mobile phone, PDA, PC, TV etc.), and - at any time. With mobile business, business processes can be supported or modified to increase productivity. This adds up to more sales at lower cost. |
| Mobile Commerce | M-commerce is a hybrid of m-business and e-commerce. M-commerce is the generic term for all types of transactions based on mobile electronic media and wireless networks. |
| Mobile Office | A mobile office allows employees to access company resources from anywhere, just as if they were at their office within the company. Realization of the mobile office is largely dependent on recent developments in Internet technology, data and telecommunication networks, and cellular networks. |
| Tag | A formatting code inside an HTML document. |
| WAN | Wide Area Network: This refers to the transmission and switching technology used to combine a number of LANs to form a large network. Today, this is generally achieved with Internet technology. |
| WAP | Wireless Application Protocol: WAP allows displaying specially prepared short text messages and simple graphics from the Internet on a mobile phone. For example, a user can call up his/her account balance or reserve cinema tickets using his/her mobile phone. |
| XML | Abbreviation for Extensible Markup Language: A new language for pages published on the World Wide Web (WWW). XML is considerably more flexible than HTML, and offers more functions for programmers. |

## Claims

1. Multimedia display device, comprising
- a screen (102) for displaying (S₇) content information (124a),
- a control means (104) for controlling (S₅) the screen (102),
- means (106) for enabling a user to input information, and
- a bidirectional air interface (108) for wirelessly transmitting data to external devices and for wirelessly receiving data from external devices and for transmitting data from/to the control means (104) whereby the control means (104) is adapted
- to receive content information (124a) from an external file server (118) over the air interface (108) and
- to transmit user input information (123) over the air interface (108) to the external file server (118) Wherein
the control means (104) is further adapted
- to receive remote control information (124b) from an external remote control device (116) over the air interface (108), the remote control information (124b) setting parameters for the display (S₇) of the content information (124a) on the screen (102),
- to locally store content information (124a) received from the external file server (118) over the air interface (108) in a permanent storage device (110) in the multimedia display device (100) for later display (S₇) on the screen (102),
- to transmit information (124c) representing the current status of the multimedia display device (100) over the air interface (108) to the external remote control device (116) and
- to automatically display the content information (124a) on the screen (102) in case that an external tag device (114) is wirelessly detected.

2. The device according to claim 1,
further comprising a speaker means (103) for rendering audible content information (124a) and remote control information (124b), respectively, wherein the control means (104) controls the speaker means (103) and further comprising a detecting means (113a') for wirelessly detecting (S₂) the presence of a tag device (114) in the neighborhood of the multimedia display device (100), wherein the control means (104) dynamically controls (S5) the display (S₇) of the content information (124a) depending on the detection (S₂) of a tag device (114).

3. Multimedia display device according to claim 2,
**characterized in that**
the detecting means (113a') is an RF receiver with a tag antenna (113b') and the detected tag device (114) is a transponder comprising a wireless smart card (114').

4. Multimedia display device according to claim 2 or 3,
**characterized in that**
the content information (124a) displayed depends on identification data (126) of a detected tag device (114).

5. Multimedia display device according to anyone of the preceding claims,
**characterized in**
- **that** the control means (104) is further adapted to control the information input means (106), the permanent storage device (110), the detecting means (113a') and a mobile transceiver (113a), said mobile transceiver (113a) being capable of transmitting and/or receiving modulated RF signals to/from the external file server (118), and
- by a coprocessor (105a) for controlling the bidirectional air interface (108) and the multimedia display device (100) depending on setting parameters designated by remote control information (124b) received.

6. Multimedia display device according to anyone of the preceding claims,
**characterized in that**
the bidirectional air interface (108) is an IR interface.

7. The device according to claim 1, comprising
- a local storage device (110) for advertisement information (124a),
- a database (111) associating (S₃) identification data (126) of wireless smart cards (114') with predefined advertisement information (124a),
- an RF receiver (113a') for detecting (S₂) the presence of a wireless smart card (114') in the neighborhood of the display terminal (100),
- the controller (104) dynamically displaying (S₇) the locally stored advertisement information (124a) associated with the identification data (126) of the wireless smart card (114') detected.

## Patentansprüche

1. Multimedia-Anzeigevorrichtung, umfassend
- einen Bildschirm (102), um eine Inhaltsinformation (124a) anzuzeigen (S₇),
- ein Steuerungsmittel (104), um den Bildschirm (102) zu steuern (S₅),
- Mittel (106), um einem Bediener zu ermöglichen, Information einzugeben, und
- eine bidirektionale Luftschnittstelle (108), um drahtlos Daten zu externen Vorrichtungen zu übertragen und um drahtlos Daten von externen Vorrichtungen zu empfangen und um Daten von/zu dem Steuerungsmittel (104) zu übertragen, wobei das Steuerungsmittel (4) geeignet ist,
- um die Inhaltsinformation (124a) von einem externen Dateiserver (118) über die Luftschnittstelle (108) zu empfangen, und
- um die durch den Bediener eingegebene Information (123) über die Luftschnittstelle (108) zu dem externen Dateiserver (118) zu übertragen,
wobei
das Steuerungsmittel (104) ferner geeignet ist,
- eine Fernsteuerungsinformation (124b) von einer externen Fernsteuerungsvorrichtung (116) über die Luftschnittstelle (108) zu empfangen, wobei die Fernsteuerungsinformation (124b) Parameter für die Anzeige (S₇) der Inhaltsinformation (124a) auf dem Bildschirm (102) einstellt,
- um die Inhaltsinformation (124a), die von dem externen Dateiserver (118) über die Luftschnittstelle (108) empfangen wurde, lokal in einer permanenten Speichervorrichtung (110) in der Multimedia-Anzeigevorrichtung (100) zur späteren Anzeige (S₇) auf dem Bildschirm (102) zu speichern,
- um Information (124c), die den aktuellen Status der Multimedia-Anzeigevorrichtung (100) abbildet, über die Luftschnittstelle (108) an die externe Fernsteuerungsvorrichtung (116) zu übertragen, und
- um automatisch die Inhaltsinformation (124a) auf dem Bildschirm (102) in dem Fall anzuzeigen, dass eine externe Endgerät-Vorrichtung (114) drahtlos detektiert wird.

2. Vorrichtung nach Anspruch 1,
ferner umfassend ein Lautsprechermittel (103), um hörbare Inhaltsinformation (124a), beziehungsweise Fernsteuerungsinformation (124b) wiederzugeben, wobei das Steuerungsmittel (104) das Lautsprechermittel (103) steuert, und wobei ferner ein Detektierungsmittel (113a') umfasst ist, um drahtlos das Vorhandensein einer Endgerät-Vorrichtung (114) in der Nachbarschaft der Multimedia-Anzeigevorrichtung (100) zu detektieren (S₂), wobei das Steuerungsmittel (104) die Anzeige (S₇) der Inhaltsinformation (124a) abhängig von der Detektion (S₂) einer Endgerät-Vorrichtung (114) dynamisch steuert (S₅).

3. Multimedia-Anzeigevorrichtung nach Anspruch 2, **dadurch gekennzeichnet, dass**
das Detektierungsmittel (113a') ein RF-Empfänger mit einer Endgerät-Antenne (113b') ist und die detektierte Endgerät-Vorrichtung (114) ein Transponder mit einer drahtlosen Chipkarte (114') ist.

4. Multimedia-Anzeigevorrichtung nach Anspruch 2 oder 3, **dadurch gekennzeichnet, dass**
die angezeigte Inhaltsinformation (124a) von Identifizierungsdaten (126) einer detektierten Endgerät-Vorrichtung (114) abhängt.

5. Multimedia-Anzeigevorrichtung nach einem der vorstehenden Ansprüche, **dadurch gekennzeichnet,**
- **dass** das Steuerungsmittel (104) ferner geeignet ist, um das Informationseingabemittel (106), die permanente Speichervorrichtung (110), das Detektierungsmittel (113a') und einen mobilen Transceiver (113a) zu steuern, wobei der mobile Transceiver (113a) fähig ist, modulierte RF-Signale zu/von dem externen Dateiserver (118) zu übertragen und/oder zu empfangen, und
- **dass** ein Coprozessor (105a) vorgesehen ist, um die bidirektionale Luftschnittstelle (108) und die Multimedia-Anzeigevorrichtung (100) abhängig von Einstellgrößen, die durch die empfangene Fernsteuerungsinformation (124b) bezeichnet sind, zu steuern.

6. Multimedia-Anzeigevorrichtung nach einem der vorstehenden Ansprüche, **dadurch gekennzeichnet, dass**
die bidirektionale Luftschnittstelle (108) eine IR-Schnittstelle ist.

7. Vorrichtung nach Anspruch 1, umfassend
- eine lokale Speichervorrichtung (110) für Werbeinformation (124a),
- eine Datenbank (111), die Identifizierungsdaten (126) von drahtlosen Chipkarten (114') mit der zuvor bestimmten Werbeinformation (124a) verbindet (S₃),
- einen RF-Empfänger (113a'), um das Vorhandensein einer drahtlosen Chipkarte (114') in der Nachbarschaft des Anzeigeendgeräts (100) zu detektieren (S₂),
- den Controller (104), der die lokal gespeicherte Werbeinformation (124a), die mit den Identifizierungsdaten (126) der detektierten drahtlosen Chipkarte (114') verbunden ist, dynamisch anzeigt (S₇).

## Revendications

1. Dispositif de présentation multimédia, comportant
- un écran (102) pour présenter (S₇) un contenu informationnel (124a),
- un moyen de contrôle (104) pour contrôler (S₅) l'écran (102),
- des moyens (106) pour permettre à un utilisateur d'entrer des informations, et
- une interface aérienne bidirectionnelle (108) pour permettre de transmettre sans fil des données à des dispositifs externes et de recevoir sans fil des données provenant de dispositifs externes et de transmettre des données depuis/vers le moyen de contrôle (104), le moyen de contrôle (104) étant adapté pour
- recevoir le contenu informationnel (124a) d'un serveur de fichiers externe (118) par le biais de la interface aérienne (108) et pour
- transmettre des informations (123), entrées par l'utilisateur, au serveur de fichiers externe par le biais de l'interface aérienne (108),
dispositif dans lequel le moyen de contrôle est en outre adapté pour
- recevoir des informations de commande à distance (124b) provenant d'un dispositif externe de commande à distance (116) par le biais de l'interface aérienne (108), les informations de commande à distance (124b) réglant des paramètres destinés à la présentation (S₇) du contenu informationnel (124a) sur l'écran (102),
- mémoriser localement le contenu informationnel (124a) reçu du serveur de fichiers externe (118), par le biais de l'interface aérienne (108), dans un dispositif de mémorisation permanente (110) situé dans le dispositif de présentation multimédia (100) pour une présentation ultérieure (S₇) à l'écran (102),
- transmettre des informations (124c) représentant l'état actuel du dispositif de présentation multimédia (100), par le biais de l'interface aérienne (108), au dispositif externe de commande à distance (116) et
- présenter automatiquement le contenu informationnel (124a) à l'écran (102) dans le cas où un dispositif balisé externe (114) est détecté sans fil.

2. Dispositif selon la revendication 1, comportant en outre des moyens haut-parleur (103) pour rendre audible le contenu informationnel (124a) et les informations de commande à distance (124b), respectivement, le moyen de contrôle (104) contrôlant les moyens haut parleur (103), et comportant en outre un moyen de détection (113a') pour détecter (S₂) sans fil la présence d'un dispositif balisé (114) au voisinage du dispositif de présentation multimédia (100), le moyen de contrôle (104) contrôlant dynamiquement (S₅) la présentation (S₇) du contenu informationnel (124a) en fonction de la détection (S₂) d'un dispositif balisé (114).

3. Dispositif de présentation multimédia selon la revendication 2, **caractérisé en ce que** le moyen de détection (113a') est un récepteur RF doté d'une antenne balisée (113b') et le dispositif balisé détecté (114) est un transpondeur comportant une carte à mémoire sans fil (114').

4. Dispositif de présentation multimédia selon la revendication 2 ou 3, **caractérisé en ce que** le contenu informationnel (124a) présenté dépend de données d'identification (126) d'un dispositif balisé détecté (114).

5. Dispositif de présentation multimédia selon l'une quelconque des revendications précédentes, **caractérisé**
- **en ce que** le moyen de contrôle (104) est en outre adapté pour contrôler les moyens d'entrée d'informations (106), le dispositif de mémorisation permanente (110), les moyens de détection (113a') et un transpondeur mobile (113a), ledit transpondeur mobile (113a) étant apte à transmettre et/ou recevoir des signaux RF modulés depuis et vers le serveur de fichiers externe (118), et
- par un coprocesseur (105a) pour commander l'interface aérienne bidirectionnelle (108) et le dispositif de présentation multimédia (100) en fonction du réglage de paramètres défini par les informations de commande à distance (124b) qui ont été reçues.

6. Dispositif de présentation multimédia selon l'une quelconque des revendications précédentes, **caractérisé en ce que** l'interface aérienne bidirectionnelle (108) est une interface IR.

7. Dispositif selon la revendication 1, comportant
- un dispositif de mémorisation local (110) destiné à des informations de publicité (124a),
- une base de données (111) associant (S₃) des données d'identification (126) de cartes à mémoire sans fil (114') à des informations de publicité prédéfinies (124a),
- un récepteur RF (113a') permettant de détecter (S₂) la présence d'une carte à mémoire sans fil (114') au voisinage du terminal de présentation (100),
- le contrôleur (104) présentant dynamiquement les informations de publicité (124a) qui ont été mémorisées localement et qui sont associées aux données d'identification (126) de la carte à mémoire sans fil (114') qui a été détectée.
